Europäisches Patentamt

European Patent Office

Office européen des brevets

(19)

(11) Veröffentlichungsnummer : **0 125 610 B1**

# (12) EUROPÄISCHE PATENTSCHRIFT

(45) Veröffentlichungstag der Patentschrift :
17.08.88

(21) Anmeldenummer : 84105204.6

(22) Anmeldetag : 08.05.84

(51) Int. Cl.⁴ : **G 01 H   1/00, B 23 Q 15/12,
B 23 Q 11/00, G 01 N 29/04**

(54) **Auswertung von elektrisch gewandelten Schallemissionssignalen.**

(30) Priorität : 13.05.83 DE 3317569

(43) Veröffentlichungstag der Anmeldung :
21.11.84 Patentblatt 84/47

(45) Bekanntmachung des Hinweises auf die Patenterteilung : 17.08.88 Patentblatt 88/33

(84) Benannte Vertragsstaaten :
**AT BE CH DE FR GB IT LI LU NL SE**

(56) Entgegenhaltungen :
EP-A- 0 045 942
CH-A-   469 534
DE-A- 2 125 426
DE-A- 2 437 256
US-A- 3 554 012
**ENGINEERS DIGEST, Band 31, Nr. 12, Dezember
1970, Seiten 47-52, London, GB; W. TUSTIN: "Vibra-
tion-detection and protection systems"
Die Akte enthält technische Angaben, die nach dem
Eingang der Anmeldung eingereicht wurden und die
nicht in dieser Patentschrift enthalten sind.**

(73) Patentinhaber : **Siemens Aktiengesellschaft Berlin
und München
Wittelsbacherplatz 2
D-8000 München 2 (DE)**

(72) Erfinder : **Stephan, Jürgen, Dipl.-Ing.
Zweigstrasse 4
D-8080 Emmering (DE)**
Erfinder : **Tesch, Richard, Ing. grad.
Flurstrasse 21
D-8011 Siegertsbrunn (DE)**

## Beschreibung

Die Erfindung betrifft ein Verfahren zur Auswertung von elektrisch gewandelten Schallemissionssignalen, bezüglich Amplitude, Frequenz, Integral, Anstiegszeit, Dauer oder Kombinationen dieser Merkmale.

Derartige Verfahren sind zum Beispiel erforderlich zum Aus- und Bewerten von Schallemissionssignalen zur Überwachung von Schneidwerkzeugen (zum Beispiel Werkzeugen zum « Trennen » nach DIN 8588) oder spanabhebenden Werkzeugen.

Die Verarbeitung elektrischer Signale, wie sie nach einfacher Verstärkung aus einem Piezo-Kristall entstehen, bereitet Schwierigkeiten, wenn Nutz- und Störsignale nicht einfach zu trennen sind. Das ist beispielsweise bei einer Vorrichtung zum Feststellen des Verschleißes an Schneidwerkzeugen unter Auswertung der am Schneidwerkzeug auftretenden Schwingungen der Fall, die in der EP-A1-45 942 der Anmelderin beschrieben ist.

Zur Datenaufbereitung stehen Amplituden- und Frequenzfilterung sowie eine Bewertung der Anstiegs- und Abfallzeit sowie Integralbildung der Signale zur Verfügung. Entstehen die auszuwertenden Signale zu regelmäßigen Zeiten, so kann durch Ausblenden das Nutz- vom Störsignal getrennt werden.

Bei der Schallemissionsanalyse von Trennvorgängen kommt es zum Beispiel durch mechanische Einflüsse zu nicht periodischen Auswertezeiten, so daß eine Beeinflussung der Auswertung durch die Maschinensteuerung unmöglich ist. Bei der Bearbeitung von nicht einfachen Werkstücken, zum Beispiel beim Drehen, ist eine konstante Bewertung der entstehenden Signale nicht gegeben, da sich Vorschub oder Umdrehungsgeschwindigkeit ändern, was einen wesentlichen Einfluß auf die auszuwertenden Daten hat. Dieses bisher nicht gelöste Problem führte zu unbefriedigenden Ergebnissen bei der Signalauswertung, da der auszuwertende Schallemissionsbereich nicht oder nur teilweise erfaßt wurde.

Der Erfindung liegt die Aufgabe zugrunde, das eingangs genannte Verfahren zu realisieren. Diese Aufgabe wird durch ein Verfahren nach dem Anspruch 1 gelöst. Mit dem Verfahren nach der Erfindung ist es erst möglich, ein Signal zu erhalten, das mit der Eigenschaft des Werkzeuges korreliert. Weiter ist zum Beispiel entsprechend dem Zustand des Werkzeuges oder Werkstückes eine variable Sollwertvorgabe des auszuwertenden Signales möglich.

Ausgestaltungen der Erfindung ergeben sich aus den abhängigen Ansprüchen.

Die Erfindung wird anhand der Figuren erläutert, wobei die Digitalisierung nicht dargestellt ist. Es zeigen :

Figur 1 ein Flußdiagramm zur diskontinuierlichen Signalauswertung,

Figur 2 ein Schaltungsprinzip zur diskontinuierlichen Signalauswertung und

Figur 3 eine schematische Darstellung der Schallemissionsanalyse beim Arbeiten mit Schneidwerkzeugen.

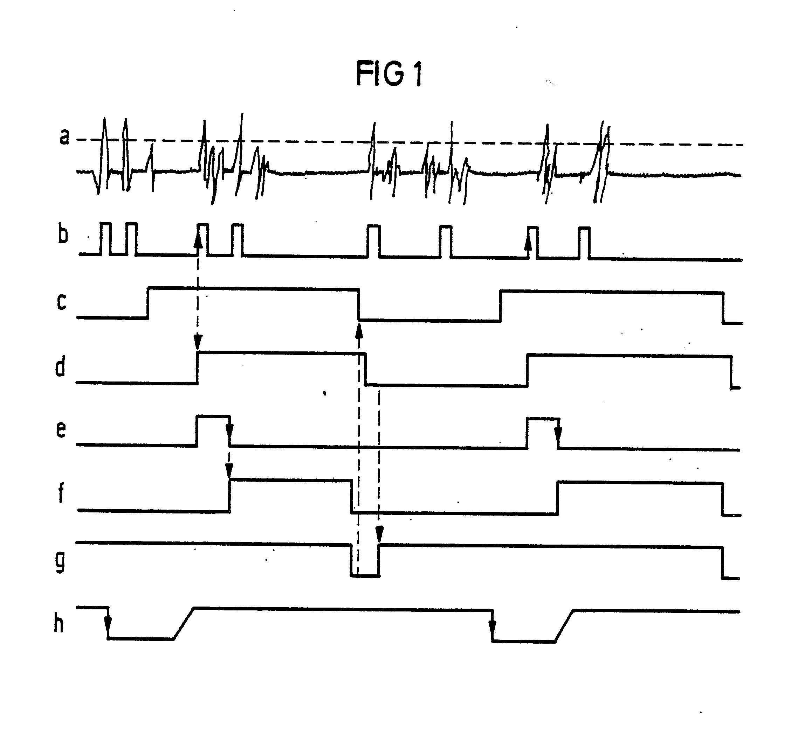

In der Figur 1 ist in der ersten Zeile ein kontinuierliches Schallemissionssignal dargestellt, das zum Beispiel von einem Trennvorgang herrührt und sich aus Nutz- und Störsignalen zusammensetzt. Nach einer Schwellenwertbildung (gestrichelt a) ist mit b ein Signal bezeichnet, das beispielsweise aus der Amplitude des analogen Ursprungssignals abgeleitet wird und als Digitalsignal vorliegt. Mit einem kontinuierlichen Zeitsignal c wird mit der Schwelle b ein Freigabesignal d gebildet. Nach einer Verzögerung e wird der zu bewertende analoge Datenstrom mit f freigegeben. Nach Ablauf der Meßzeit erfolgt ein Rücksetzen Q in den Grundzustand. Durch einen externen oder internen Trigger h kann zur Erhöhung der Aussagekraft das kontinuierliche Zeitsignal c synchronisiert werden.

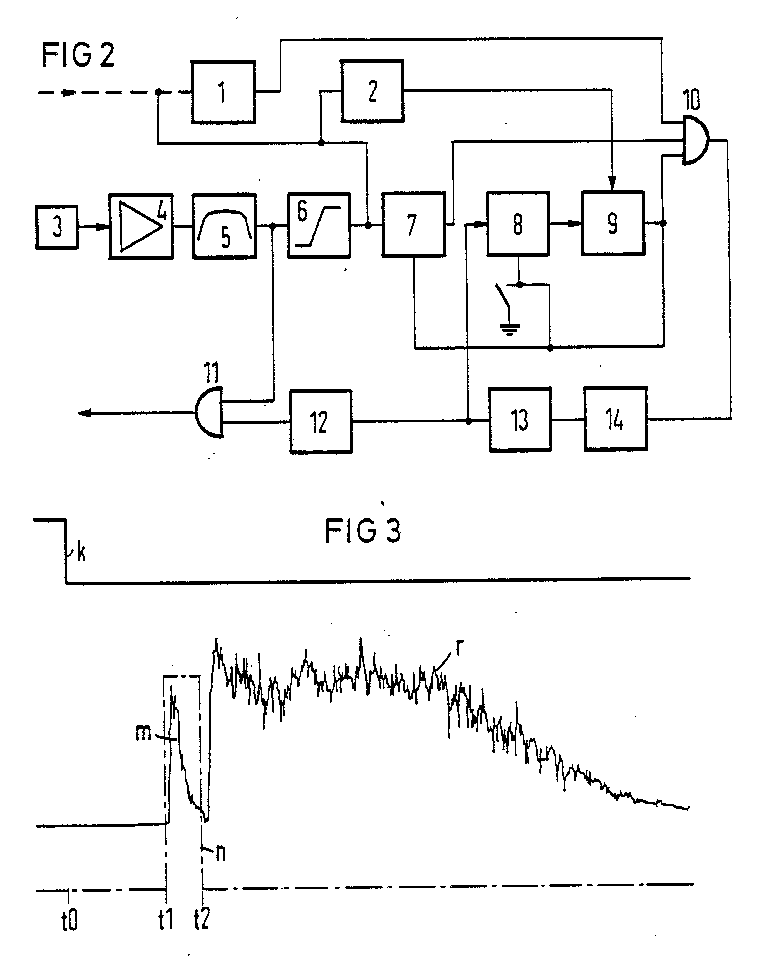

In der Schaltungsanordnung nach Figur 2 sind mit 1 Verzögerungsschaltmittel, mit 2 eine Zeitbeschränkung, mit 3 ein Sensor, mit 4 ein Verstärker, mit 5 ein Filter, mit 6 ein Diskriminator, mit 7 bis 9 Flip-Flops, mit 10 und 11 eine Entscheidungslogik, mit 12 eine Meßzeitvorgabe, mit 13 Verzögerungsschaltmittel, mit 14 ein Impulsformer bezeichnet.

Das von einem Piezowandler 3 eingehende Signal kommt auf den Verstärker 4 und nach Filterung in 5 auf den Diskriminator 6. Gleichzeitig geht das Signal außerdem auf eine Torschaltung 11. Von dem Diskriminator 6 gelangt das Signal zu einer internen, externen Taktsynchronisation 1 und nach der Zeitbeschränkung 2, mit Hilfe des zweiten Signalweges über die Flip-Flop-Schaltung zu dem Tor 10. Dieses Signal wird in dem Impulsformer 14 und Zeitverzögerer 13 aufbereitet und nach digitaler Meßzeitvorgabe 12 mit dem analogen Signal in 11 verknüpft.

Andererseits wird nach der Verzögerung 13 des Signals über die Flip-Flop-Schaltungen 8, 9 ein Rücksetzen der Schaltung in den Grundzustand erreicht.

Nach der Darstellung in der Figur 3 ist mit k der Startimpuls zum Beispiel eines Schneidantriebes bezeichnet. Die während eines Bewegungsablaufs ausgewertete Schallemission ist mit m innerhalb eines Zeitfensters n bezeichnet. Bei r handelt es sich um Störsignale in Form von Schlag- und Reibgeräuschen.

Der Zeitpunkt $t_0$ kennzeichnet die Ansteuerung des Schneidantriebes auf der Zeitachse. Bis zum Beginn des Anschnittes $t_1$ vergehen bei bestimmten Produktionsbedingungen etwa 2,9 bis 3,6 ms. Der zur Auswertung wichtige Zeitbereich nach t ist zum Beispiel 1 ms lang und wird so getriggert, daß keine Überschneidungen mit den darauf folgenden Störsignalen auftreten. Nur im Bereich zwischen $t_1$ und $t_2$ liegt das Nutzsignal, dessen Auswertung angestrebt wird.

## Patentansprüche

1. Verfahren zur Auswertung von elektrisch gewandelten Schallemissionssignalen, bezüglich Amplitude, Frequenz, Integral, Anstiegszeit, Dauer oder Kombinationen dieser Merkmale, in dem aus dem gesamten, zur Verfügung stehenden, analogen Datenstrom (a) der genannten Schallemissionssignale aus einem nur durch Bewertung angebbaren, dynamisch sich ändernden Zeitbereich ($t_1$, $t_2$) ein Nutzsignal gebildet wird, wobei der genannte Datenstrom digitalisiert wird und diese digitalen Daten bewertet werden und das Ergebnis dieser Bewertung zur dynamischen Veränderung des Beginns oder der Dauer des genannten Zeitbereichs ($t_1$, $t_2$) dient.

2. Verfahren nach Anspruch 1, wobei die Dauer des Zeitbereichs ($t_1$, $t_2$) fest ist.

3. Verfahren nach Anspruch 1, wobei bei der Digitalisierung eine Datenreduktion durchgeführt wird, die eine Auswertung zum Beispiel nach Häufigkeit von Impulsen und nach Impulsbreiten ermöglicht.

4. Verfahren nach Anspruch 3, wobei nur charakteristische Signale, zum Beispiel bestimmte Amplituden digitalisiert werden.

5. Verfahren nach einem der Ansprüche 1 bis 4 zur Auswertung von elektrischen Signalen, die von Piezowandlern stammen, wobei zur Beurteilung der Signalinformation ein weiteres Signal, zum Beispiel ein externer und/oder interner Trigger (h) zur Erhöhung der Aussagekraft beim Auswerten der Daten eingeführt wird.

6. Verfahren nach Anspruch 5, dadurch gekennzeichnet, daß das Signal (a) einem Diskriminator (6) zugeführt wird, der eine Charakterisierung des Signals vornimmt und daß das Ausgangssignal des Diskriminators mit einem der Trigger verknüpft wird und über Zeitglieder (13) ein Freigabesignal zur Auswertung des Eingangssignals erzeugt wird.

## Claims

1. A method of analysing electrically-converted emitted sound signals, in respect of amplitude, frequency, integral, build-up time, duration, or any combination of these features, in which the entirety of the emitted sound signals which are available are converted into electrical signals to constitute an analogue data flow (a), from which a useful signal is formed for a time range ($t_1$, $t_2$) which can be indicated only by evaluation and which changes dynamically, where the aforementioned data flow is digitalised, these digital data items evaluated, and the result of this evaluation used to implement a dynamic change in the beginning or the duration of the aforementioned time range ($t_1$, $t_2$).

2. A method as claimed in Claim 1, where the duration of the time range ($t_1$, $t_2$) is fixed.

3. A method as claimed in Claim 1, where a data reduction takes place during digitalisation, which permits analysis in respect of the frequency of pulses and pulse widths, for example.

4. A method as claimed in claim 3, where only characteristic signals, for example specific amplitudes, are digitalised.

5. A process as claimed in one of Claims 1 to 4 for the analysis of electrical signals which emanate from piezo-electric transducers where a further signal, for example an external and/or internal trigger (h), is introduced for the assessment of the signal information in order to increase the integrity of the data analysis.

6. A method as claimed in Claim 5, characterised in that the signal (a) is fed to a discriminator (6) which serves to characterise the signal, and that the output signal of the discriminator is logic-linked to one of the triggers and produces a release signal for the analysis of the input signal via timers (13).

## Revendications

1. Procédé pour l'évaluation de signaux sonores convertis en signaux électriques, pour ce qui concerne, leur amplitude, leur fréquence, leur intégrale, leur temps de montée, leur durée ou la combinaison de ces paramètres, qui consiste à former un signal utile à partir de la totalité du courant d'informations analogiques (a) disponibles desdits signaux sonores, dans un intervalle de temps ($t_1$, $t_2$) susceptible de ne dépendre que de l'évaluation et se modifiant dynamiquement, ledit courant d'information étant numérisé, ces informations numériques étant évaluées, et le résultat de cette évaluation servant pour des modifications dynamiques du début ou de la durée dudit intervalle de temps ($t_1$, $t_2$).

2. Procédé selon la revendication 1, dans lequel la durée d'un intervalle de temps ($t_1$, $t_2$) est fixe.

3. Procédé selon la revendication 1, qui consiste à réaliser, lors de la numérisation, une réduction des informations, qui rend possible une évaluation par exemple d'après la fréquence d'impulsions et d'après la largeur de celles-ci.

4. Procédé selon la revendication 3, qui consiste à ne numériser que des signaux caractéristiques, par exemple des amplitudes bien définies.

5. Procédé selon l'une des revendications 1 à 4, pour l'évaluation de signaux électriques issus d'un convertisseur piézo-électrique, qui consiste, afin d'apprécier l'information du signal, à introduire un autre signal par exemple un signal de déclenchement externe et/ou interne (h), afin d'augmenter, lors de l'évaluation des données, l'énergie de l'information numérique.

6. Procédé selon la revendication 5, caractérisé en ce que le signal (a) est appliqué à un discriminateur (6) qui procède à une caractérisation du signal, que le signal de sortie du discriminateur est combiné logiquement avec l'un des multivibrateurs bistables, et que l'on produit, par l'intermédiaire de dispositif de temporisation (13), un signal de libération pour l'évaluation du signal d'entrée.

# FIG 1

## FIG 2

## FIG 3